(19) Europäisches Patentamt
European Patent Office
Office européen des brevets

(11) **EP 3 301 917 A1**

(12) **EUROPEAN PATENT APPLICATION**

(43) Date of publication:
**04.04.2018 Bulletin 2018/14**

(51) Int Cl.:
*H04N 19/11* (2014.01)  *H04N 19/157* (2014.01)
*H04N 19/186* (2014.01)  *H04N 19/174* (2014.01)
*H04N 19/192* (2014.01)  *H04N 19/593* (2014.01)

(21) Application number: **16306279.7**

(22) Date of filing: **30.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **THOREAU, Dominique
  35576 CESSON-SÉVIGNÉ (FR)**

• **TURKAN, Mehmet
  35576 CESSON-SÉVIGNÉ (FR)**
• **ALAIN, Martin
  35576 CESSON-SÉVIGNÉ (FR)**
• **ZEPEDA SALVATIERRA, Joaquin
  35576 CESSON-SÉVIGNÉ (FR)**

(74) Representative: **Huchet, Anne
  TECHNICOLOR
  1-5, rue Jeanne d'Arc
  92130 Issy-les-Moulineaux (FR)**

(54) **METHOD AND APPARATUS FOR SPATIAL GUIDED PREDICTION**

(57)    A spatial guided prediction technique uses reconstructed pixels of a first component of a digital video image block to determine prediction modes used to recursively build prediction blocks for the other components of the same digital video image block. The technique builds improved predictions resulting in smaller prediction residuals and less bits to code for a given image quality. In one embodiment, the prediction blocks for the subsequent digital video component blocks are built recursively line by line. In another embodiment, the prediction blocks for subsequent digital video component blocks are built recursively column by column.

*FIG. 5*

EP 3 301 917 A1

**Description**

FIELD OF THE INVENTION

The present principles relate to image and video compression systems and coders and decoders for that purpose.

BACKGROUND OF THE INVENTION

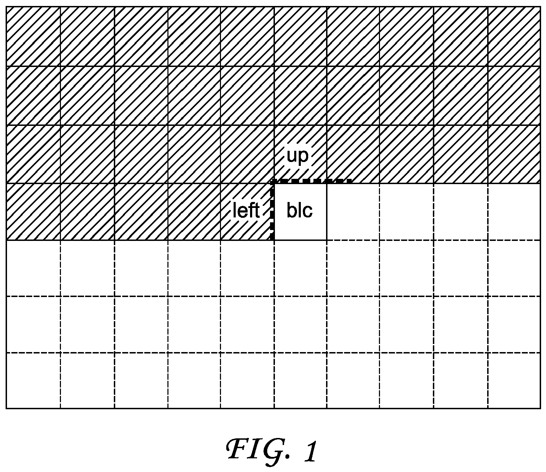

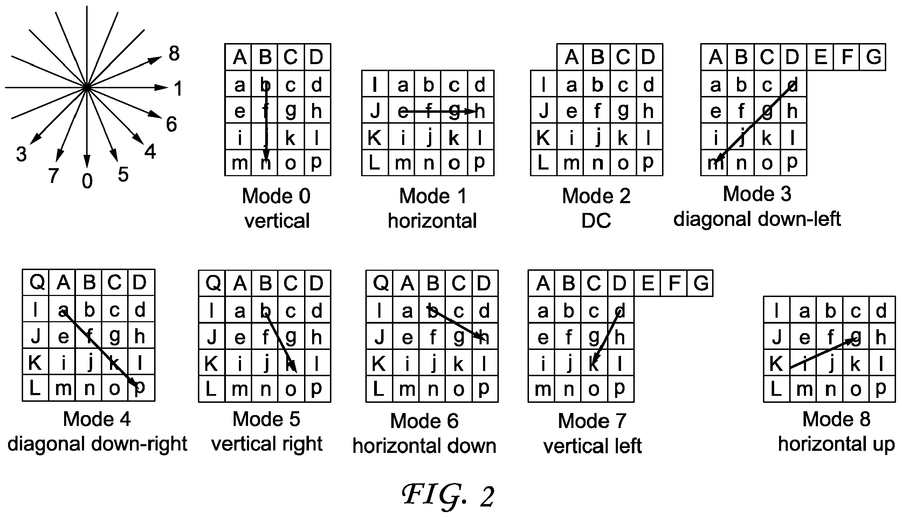

In H.264, Intra4x4 and Intra8x8 intra prediction corresponds to a spatial estimation of the pixels of a current block to be coded (Figure 1) based on the neighboring reconstructed pixels. The H.264 standard specifies different directional prediction modes in order to enable the pixel prediction. Nine intra prediction modes are defined on 4x4 and 8x8 block sizes of the macroblock (MB). As described in Figure 2, eight of these modes consist of a one dimensional (1 D) directional extrapolation of the pixels (left column and top line) surrounding the current block to predict. The DC intra prediction mode (mode 2) defines the predicted block pixels as the average of available surrounding pixels.

Consider the intra4x4 prediction mode of H.264, in which the prediction depends on the reconstructed neighboring pixels as illustrated in Figure 1 with :

- *blc : the current block to encode,*
- *the shaded zone corresponding to the reconstructed pixel or causal zone,*
- *the remaining part of the picture that is not yet encoded,*
- *the pixels of left column and top line inside the causal part are used to build the spatial prediction*

Concerning the intra 4x4 prediction, the different modes are shown in Figure 2. These predictions are built as shown in Figure 2:

- *mode 1 (horizontal) the pixels e, f, g, and h are predicted with (left column) the reconstructed pixel J.*
- *mode 5:*

  - *example 1: a is predicted by (Q+A+ 1)/2*
  - *example 2 : g and p are predicted by (A+2B+C+2)/4*

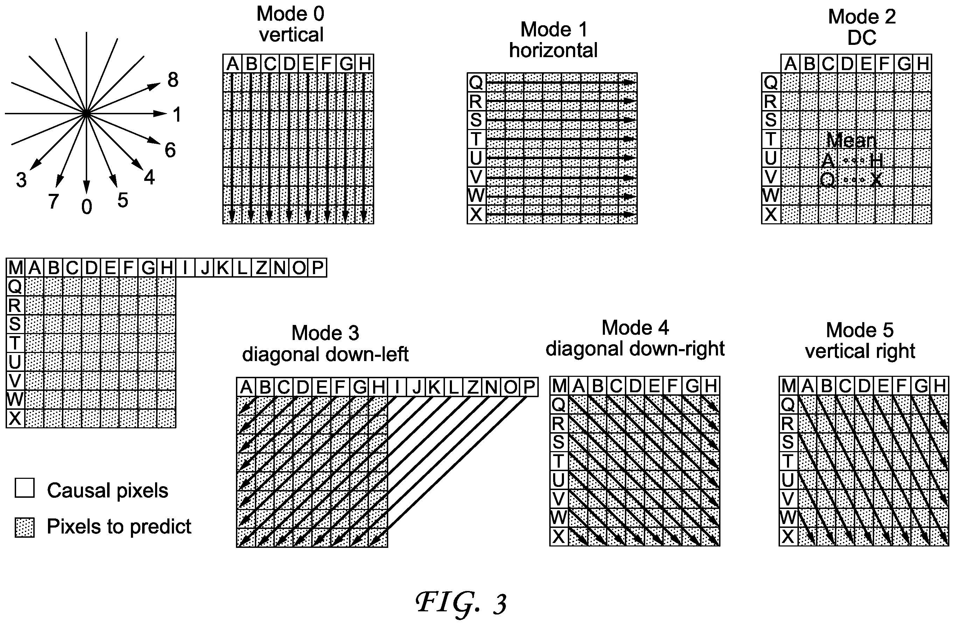

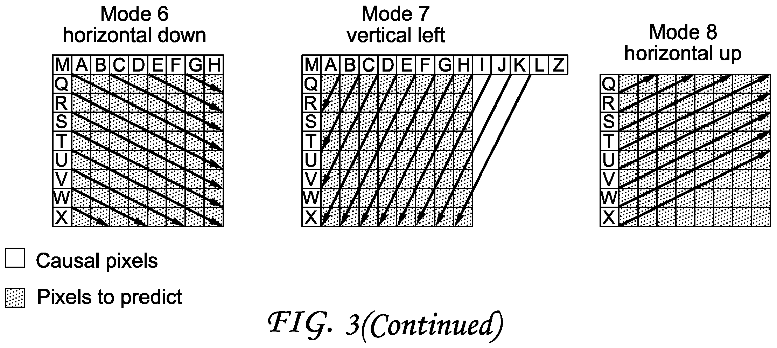

Similarly, for Intra 8x8 prediction, Figure 3 illustrates the principles used. These predictions are built as:

- *let $p_{rd}(i,j)$ represent the pixels to predict of the current block for coordinates line and column (i,j), the first pixel of indexes (0,0) being on top left of the current block,*
- *mode 1 (horizontal) the pixels $p_{rd}(0,0), p_{rd}(0,1), ... p_{rd}(0,7)$ are predicted with the reconstructed Q pixel.*
- *mode 5:*

  - *ex 1: $p_{rd}(0,0)$ is predicted by (M+A+1)/2*
  - *ex 2 : $p_{rd}(1,2)$ and $p_{rd}(3,3)$ are predicted by (A+2B+C+2)/4*

The chroma samples of a macroblock are predicted using a similar prediction technique as for the luma component in Intra 16x16 macroblocks. Four prediction modes are supported. Prediction mode 0 (vertical prediction), mode 1 (horizontal prediction), and mode 2 (DC prediction) are specified similar to the modes in Intra 4x4.

The intra prediction is then performed using the different prediction directions. After this, the residue, corresponding to the difference between a current block and the predicted block, is frequency transformed (DCT), quantized and finally encoded and then carried out. Before the encoding process, from the nine prediction modes available, the best prediction mode is selected. The direction prediction can use for example the SAD measure (Sum of Absolute Differences) computed between the current block to encode and the block of prediction. Obviously the prediction mode is encoded for each sub partition.

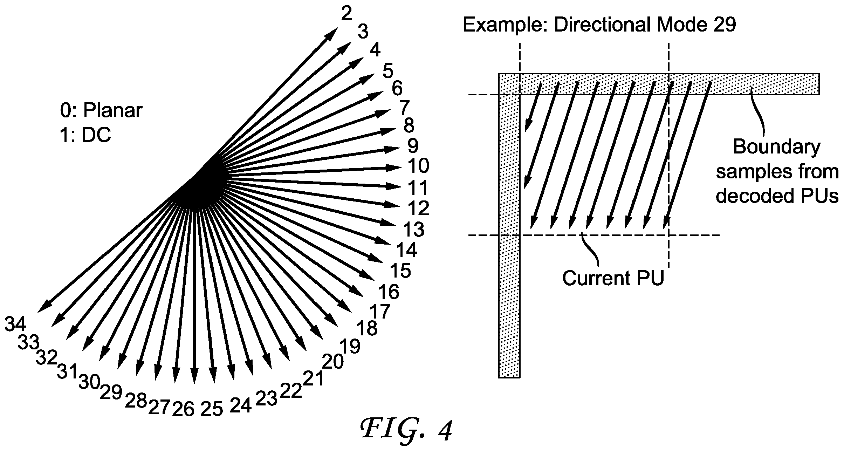

HEVC Intra prediction operates according to the block size, and previously decoded boundary samples from spatially neighboring blocks are used to form the prediction signal. Directional prediction with 33 different directional orientations is defined for square block sizes from 4x4 up to 32x32. The possible prediction directions are shown in Figure 4. Alternatively, planar prediction (assuming an amplitude surface with a horizontal and vertical slope derived from the boundaries) and DC prediction (a flat surface with a value matching the mean value of the boundary samples) can also be used.

For chroma, the horizontal, vertical, planar, and DC prediction modes can be explicitly signaled, or the chroma prediction mode can be indicated to be the same as the luma prediction mode.

For the H.264 and HEVC video compression standards for intra prediction, the luminance and chrominance components are encoded with the same spatial prediction principle. For instance in H.264, one of the nine intra coding modes is used to predict and encode the luminance block, and then one of the four chrominance intra coding modes is used to encode the chrominance blocks. In HEVC, the principle is nearly the same with the 36 intra modes for the luminance and the use or not of the same mode as luminance for the chroma blocks.

It is desired to improve the directional prediction for the case of curved contours for which the classical directional prediction modes are not sufficiently efficient. In the case of curved contours, it is desired to improve the prediction so as to reduce the high frequency coefficients of the residual error of prediction induced by the difference between the curved contour and the unidirectional prediction used in some video coding standards.

## SUMMARY OF THE INVENTION

These and other drawbacks and disadvantages of the prior art are addressed by the present principles, which are directed to a method and apparatus for spatial guided prediction for use in video image compression systems.

According to an aspect of the present principles, there is provided a method for encoding of digital video images including an operation for intra frame prediction, wherein the intra frame prediction comprises predicting a first component of a video image block using a first directional prediction mode, quantizing a residual prediction error that results from using said predicted first component and encoding the quantized residual prediction error. The method further comprises generating a reconstructed first component of the video image block from the quantized residual prediction error and recursively building a prediction block for additional components of the video image block from respective spatial neighboring reconstructed pixels of the corresponding component using a plurality of prediction modes determined from reconstructed pixels of the first component of the video image block.

According to another aspect of the present principles, there is provided an apparatus for encoding of digital video images including an operation for intra frame prediction, wherein said apparatus comprises a memory and a processor coupled to the memory and configured to perform the video image compression, wherein the processor is configured to perform said intra frame prediction by predicting a first component of a video image block using a first directional prediction mode, quantizing a residual prediction error that results from using said predicted first component and encoding the quantized residual prediction error. The processor is further configured to generate a reconstructed first component of the video image block from the quantized residual prediction error and recursively build a prediction block for additional components of the video image block from respective spatial neighboring reconstructed pixels of the corresponding component using a plurality of prediction modes determined from reconstructed pixels of the first component of the video image block.

According to an aspect of the present principles, there is provided a method for decoding of digital video images including an operation for intra frame prediction, comprising decoding a residual prediction error of a first component of a digital video image block, reconstructing said first component of the digital video image block using the decoded residual prediction error and a prediction obtained with a spatial intraprediction mode, and recursively building a prediction block for additional components of the video image block from respective spatial neighboring reconstructed pixels of the corresponding component using a plurality of prediction modes determined from reconstructed pixels of the first component of the video image block. The method also comprises decoding residual prediction errors for remaining components of the digital video image block, and, reconstructing remaining components of the digital video image block from the decoded residual prediction errors and the recursively reconstructed prediction block of the additional components of the digital video image block.

According to another aspect of the present principles, there is provided an apparatus for decoding of digital video images including an operation for intra frame prediction, wherein the apparatus comprises a memory, and a processor coupled to the memory and configured to perform decoding of a residual prediction error of a first component of a digital video image block, reconstructing the first component of the digital video image block using the decoded residual prediction error and a prediction obtained with a spatial intraprediction mode and recursively building a prediction block for additional components of the video image block from respective spatial neighboring reconstructed pixels of the corresponding component using a plurality of prediction modes determined from reconstructed pixels of the first component of the video image block. The processor is also configured to decode residual prediction errors for remaining components of the digital video image block, and, reconstruct remaining components of the digital video image block from the decoded residual prediction errors and the recursively reconstructed prediction block of the additional components of the digital video image block.

According to another aspect of the present principles, there is provided an apparatus for transmission of digital video images including an operation for intra frame prediction, wherein said apparatus comprises a memory and a processor coupled to the memory and configured to perform said video image compression, wherein the processor is configured to perform the intra frame prediction by predicting a first component of a video image block using a first directional prediction mode, quantizing a residual prediction error that results from using said predicted first component, and encoding the quantized residual prediction error. The processor is further configured to generate a reconstructed first component of the video image block from the quantized residual prediction error, and recursively build a prediction block for additional components of the video image block from respective spatial neighboring reconstructed pixels of the corresponding component using a plurality of prediction modes determined from reconstructed pixels of the first component of the video image block.

These and other aspects, features and advantages of the present principles will become apparent from the following detailed description of exemplary embodiments, which is to be read in connection with the accompanying drawings.

BRIEF DESCRIPTION OF THE DRAWINGS

Figure 1 shows an example of spatial estimation based on neighboring reconstructed blocks.
Figure 2 shows intra prediction encoding modes of H.264 coding.
Figure 3 shows intra 8x8 prediction modes for H.264.
Figure 4 shows intra prediction modes for HEVC.
Figure 5 shows one example of the steps to encode 4:4:4 YUV video under the present principles.
Figure 6 shows one embodiment of a decoder using spatial guided prediction under the present principles.
Figure 7 shows one embodiment of pseudocode for implementing spatial guided prediction in an encoder.
Figure 8 shows one embodiment of pseudocode for implementing spatial guided prediction in a decoder.
Figure 9 shows one embodiment of a method for spatial guided predcition under the present principles.
Figure 10 shows another embodiment of a method for spatial guided predcition under the present principles.
Figure 11 shows one embodiment of an apparatus for spatial guided prediction under the present principles.

DETAILED DESCRIPTION

An approach for spatial guided prediction for intra prediction in a digital video compression scheme is described herein.

It is desired to improve the video coding performance by keeping the same quality for a lower bit-rate. The goal is to propose a tool to be used at the encoder and at the decoder that would enable such a coding gain. The problem of directional spatial, or intra, prediction is described herein in the context of image and video coding.

In the H.264 standard we have one DC and 8 directional prediction modes. For HEVC, there are DC, Planar, and 33 directional intra prediction modes. For a current block to encode, once the best prediction mode is chosen at the encoder side, each block of luminance and chrominance components is sequentially predicted and encoded according to the chosen mode.

The objective of the present proposal is to improve the directional intra prediction by using on first component, for example, the classical directional spatial prediction and on a second and subsequent components an "aided" directional prediction mode.

In the current video coding standards, the luminance and the chrominance blocks are sequentially encoded using more or less the same coding mode for the different components of the current block. The approach described herein tries to improve the prediction quality in curved contours for which the classical directional intra prediction modes are not sufficient.

The spatial prediction of the current block is encoded by first using, for example, a given classical directional prediction mode for the first component of the block. The resulting prediction based on that mode is then used with the first component of the block to find the residual prediction error, which is quantized and encoded. Then this first component of the block is reconstructed to form a reconstructed first component.

Then, recursively build prediction blocks, line by line or column by column, for example, of the other components of the block from the respective spatial neighboring reconstructed pixels of those components with the directional prediction modes of the host coder/decoder. These directional prediction modes are found with the help of the reconstructed pixels of the reconstructed first component of the block. The mode that results in the lowest prediction error when the reconstructed first component of the block is compared to the first component of the block, either line by line or column by column, is used to build prediction blocks for the other components, which are used as "aided" prediction blocks in coding the components other than the first.

Finally, quantize and encode the residual prediction errors and rebuild the other remaining components of the block, the prediction error being the difference between the respective component of the block and the respective prediction obtained recursively above.

On the decoder side, the residual prediction error of the first component of the block is decoded. This component is reconstructed by adding the prediction of this component to the decoded residual error. The block of prediction is obtained by using one of the usual spatial prediction modes in the same way as done at the encoder side. Then, recursively build the prediction, either line by line or column by column, of each of the other components of the block from the respective spatial neighboring reconstructed pixels with the directional prediction modes of the host coder/decoder and with the help of the reconstructed pixels of the first decoded component of the block. These directional prediction modes are found with the help of the reconstructed pixels of the reconstructed first component of the block. The mode that results in the lowest prediction error when the reconstructed first component of the block is compared to the first component of the block, either line by line or column by column, is used to build prediction blocks for the other components, which are used as "aided" prediction blocks in decoding the components other than the first.

Finally, decode the residual prediction errors and rebuild each of the other remaining components of the block, by adding the respective residual prediction errors to the respective blocks of prediction obtained recursively.

Another way of stating the operations is that once the block of the first component is encoded and decoded with the m index mode:

- At the encoder side:

  step 1 : here the first block is composed of the V pixel of the chrominance, even if after the best mode (m) is estimated on the Y luminance.
  step 2 : select the best intra mode m, and compute the block of prediction $V'_{pred}$.
  step 3 : ... reconstruct or decode the block $V'$

- At the decoder side:

  Step 1: From the bit stream for a given block of pixels to decode (with the new proposal mode), build the block of prediction $V'_{pred}$ with the decoded prediction m mode. Then decode the residual error prediction block $\left(r^{V'}_{eq}\right)$, dequantize the DCT coefficients, inverse transform the dequantized error block $\left(V'_{res}\right)$ and add this error block $V'_{res}$ to the block of prediction $V'_{pred}$ giving the reconstructed first component block $V'$.

At this step at the encoder and the decoder sides, the reconstructed or decoded block $V'$ is available. Now, build the prediction for the other blocks of components with the spatial guided prediction technique. The prediction corresponds to step 4 for the encoder and to step 2 for the decoder, these two steps being strictly identical. An example of description is given in the context of HEVC intra prediction modes.

- According to the m index mode value (in reference to HEVC intra modes index), the blocks of prediction for the Y and U blocks will be realized recursively line by line or column by column. It is the reason why the pseudo code has two possibilities :

  If (m ≥ d$_{Vmn}$ and m ≤ d$_{Vmx}$) { // vertical prediction }
  else If (m ≥ d$_{Hmn}$ and m ≤ d$_{Hmx}$) { // horizontal prediction }
  else { classical prediction }

- In the case of "vertical prediction", start from the first line (0) to the last line (M-1) of the decoded block $V'$ (the guide)

  ○ First loop: For each line of the block V' of i index with i = 0 → M - 1 {

    ■ Second loop: For each prediction direction d with d = m - $\delta_d$ → m + $\delta_d$ {

    • Here, compute the prediction error erd(d) on all pixels (of j index) of the line of i index using the directional prediction mode d

    ○ $$erd(d) = \sum_{j=0}^{N-1}\left(v'_{i,j} - v'_{d,i,j}\right)^2$$ , remember that the pixel $v'_{i,j}$ is known, $v'_{i,j}$ being a pixel of the decoded block $V'$, and $v'_{d,i,j}$ the pixel extrapolated using the d mode

- } end of second loop on the d directional modes
- Determine the best directional mode $d_{bst}$ for line of i index

$$d_{bst} = \arg\min_{d} \left( erd(d) \right)$$

- And build the line of prediction of i index using the directional prediction mode $d_{bst}$ for the each component Y and U

$$y'_{pred,i} = y'_{d_{bst},i}$$

$$u'_{pred,i} = u'_{d_{bst},i}$$

  ○ } end of first loop on the lines of the blocks

- In the case of "horizontal prediction", start from the first column (0) to the last column (N-1) of the decoded block *V'* (the guide), and the algorithm is similar to previous vertical prediction, the construction of the prediction being realized column by column.

- If the prediction mode is not possible, that depends of the m value (see page 5 lines 51, 52, page 6 lines 12, 27 and 42)

  ○ $$Y'_{pred} = Y'_m$$

  ○ $$U'_{pred} = U'_m$$

  ○ In this case, the predictions of U and V blocks $\left( Y'_{pred}, U'_{pred} \right)$ correspond to the classical prediction of the standard using only one prediction mode (m).

Once the blocks of predictions $Y'_{pred}, U'_{pred},$ are formed:

At the encoder side, encode the residual prediction error block of each component (Y, U)
At the decoder side, decode the residual prediction error blocks of each component (Y, U), and reconstruct the blocks.

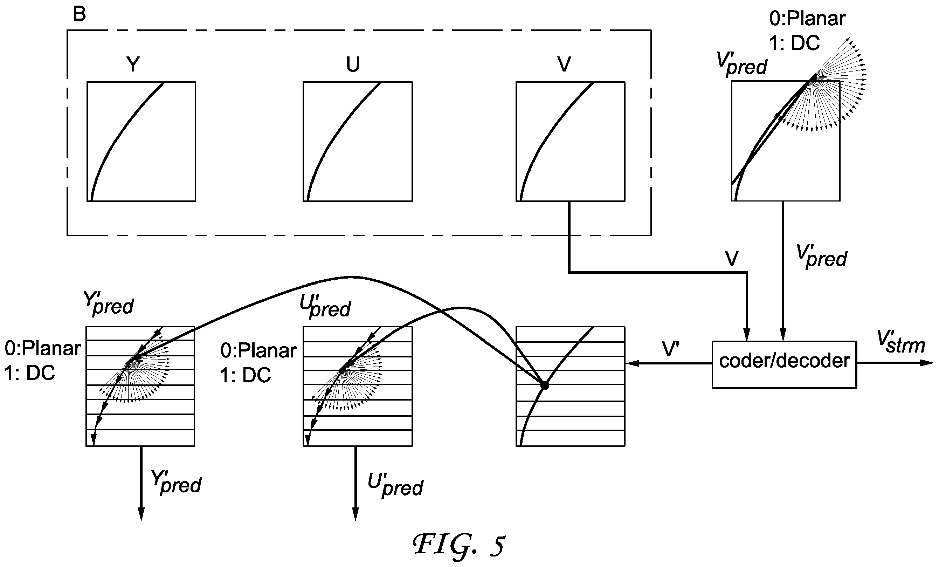

As an example for a current block of an intra image being encoded in 4:4:4 YUV format, as shown in Figure 5.B, the different steps, are explained with the help of Figure 5. The idea is to improve the directional intra prediction by using on first time, for example, the classical directional spatial prediction for a first component (a block ex : V) and on a second time an "aided" local directional prediction mode for the other components (blocks ex: Y and U) based on the reconstructed (or decoded) first component (V).

The aided local directional prediction mode is realized at the coder and the decoder side because the first decoded component block is known. In fact, it is termed "aided" because the prediction of the other components (Y and U) is built with the help of the reconstructed V block (V').

The principle is shown by Figure 5. For example, try to build a prediction for the blocks Y and U block from the reconstructed V' block. In this case the prediction is successively built line by line using locally different directional prediction modes.

At the encoder and the decoder the steps are, for example, as follows.

1. To encode, for the current block of pixels in spatial prediction, first select the luminance block *Y*
2. Find the best prediction mode from the available intra prediction modes offered by the video coding standard being used (H.264, HEVC or others), and build the block of prediction $Y'_{pred}.$

For a given block, the selection of the best intra mode among N modes could be, for example, based on minimization of the following Lagrangian equation:

$$J(Mode \mid Qp, \lambda) = D(y, y', Mode \mid Qp) + \lambda \times R(y, y', Mode \mid Qp)$$

where

- *QP* is the block quantizer, λ is the Lagrangian multiplier for mode decision,
- here, D is the sum of the squared differences between the original block luminance signal y and its reconstruction y',
- R(*y, y'* ,Mode|Qp) represents the number of bits associated with choosing the Mode. It includes the bits for the intra prediction mode and the quantized DCT-coefficients for the luminance block.

$$m = arg\,\min_{Mode}\left(J(Mode)\right)$$

Finally, the selected coding mode m that corresponds to the smallest *J* value, this mode giving the prediction block for V channel as $V'_{pred}$.

3. Then compute the difference $V_{res}$ between the block *V* and the block prediction $V'_{pred}$ and frequency transform (for example, DCT), quantize and encode and then transmit ($V'_{strm}$ in Figure 5). Finally, locally rebuild the current block *V'* of the first component by adding the prediction $V'_{pred}$ to the dequantized and inverse transformed prediction error *V'$_{res}$*.

    a. <u>Note</u>: In this YUV example, the classical prediction mode (m) is determined on the Y component and this mode is applied on the component V. At this, the encoder side, lots of others strategies are possible, but in this example, it is preferable to determine the best classical coding mode on the Y component because the dynamic of Y is higher than the other components (U and V).

4. Now recursively build the prediction (line by line or column by column), of each of the other components of the block using Spatial Guided Prediction as described herein:

    a. from the respective spatial neighboring reconstructed pixels with the directional prediction modes of the host coder/decoder
    b. with the help of the reconstructed pixels of the first decoded component of the block (*V'*).

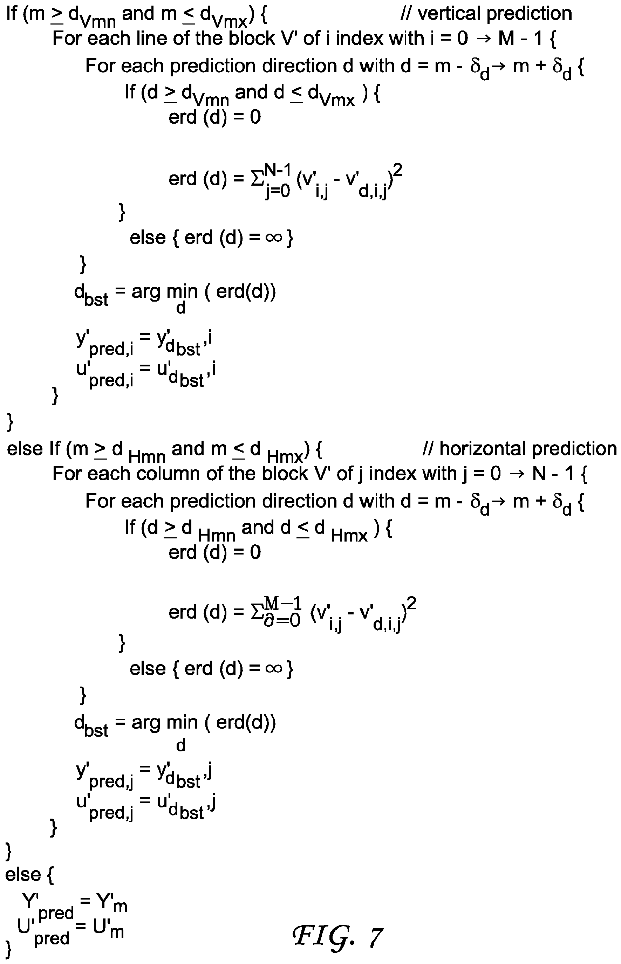

The procedure is summarized by the pseudo code shown in Figure 7 based on the HEVC example of HEVC directional vertical and horizontal prediction modes with:

    a. $d_{Vmn}$, $d_{Vmx}$ : min and max vertical prediction index, $d_{Vmn}$ = 19, $d_{Vmx}$ = 34
    b. $d_{Hmn}$, $d_{Hmx}$ : min and max horizontal prediction index, $d_{Hmn}$ = 2, $d_{Hmx}$ = 18
    c. $v'$ : |ular delta increment ex: $\delta_d$ = 1
    d. $v'_{d,i,j}, v'_{d,i}, v'_{d,j}$ : j coordinates of the reconstructed block *V'* of the first component
    e. the pixel, line and column of i, j coordinates in the block of virtual prediction block $V'_d$ according to the directional d prediction
    f. tion index
    g. $y'_{pred,i}, y'_{pred,j}, Y'_{pred}$ : the final line, column or block (size of M lines, N columns) of prediction of the Y
    h. $u'_{pred,i}, u'_{pred,j}, U'_{pred}$ : the final line, column or block block (size of M lines, N columns) of prediction of the U component

5. Then compute the difference $Y_{res}$ respectively $U_{res}$ between the original block *Y/U* and the block of prediction *Y'$_{pred}$/U'$_{pred}$*, frequency transform (DCT), quantize and encode and then transmitted . Finally, locally rebuild the block *Y'/U'* by adding the prediction *Y'$_{pred}$/U'$_{pred}$* to the dequantized an inverse transformed prediction error *Y'$_{res}$/U'$_{res}$*.

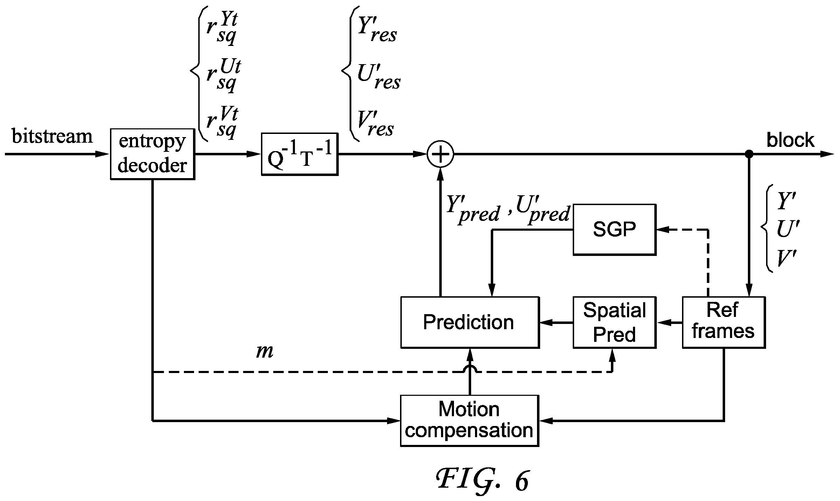

To decode, as shown in the example of Figure 6:

1. From the bit stream for a given block of pixels to decode with the proposed technique, build the block of prediction $V'_{pred}$ with the decoded prediction m mode. Then decode the residual error prediction block $(r^{V'}_{eq})$, dequantize the DCT coefficients, inverse transform the dequantized error block $(V'_{res})$ and add this error block $V'_{res}$ to the block of prediction $V'_{pred}$ giving the reconstructed first component block $V'$.

2. Now recursively build the prediction (line by line or column by column), of each of the other components of the block (Spatial Guided Prediction, SGP box on Figure 6 of the decoder) :

    a. from the respective spatial neighboring decoded pixels with the directional prediction modes of the host coder/decoder

    b. with the help of the reconstructed pixels of the first decoded component of the block ($V'$).

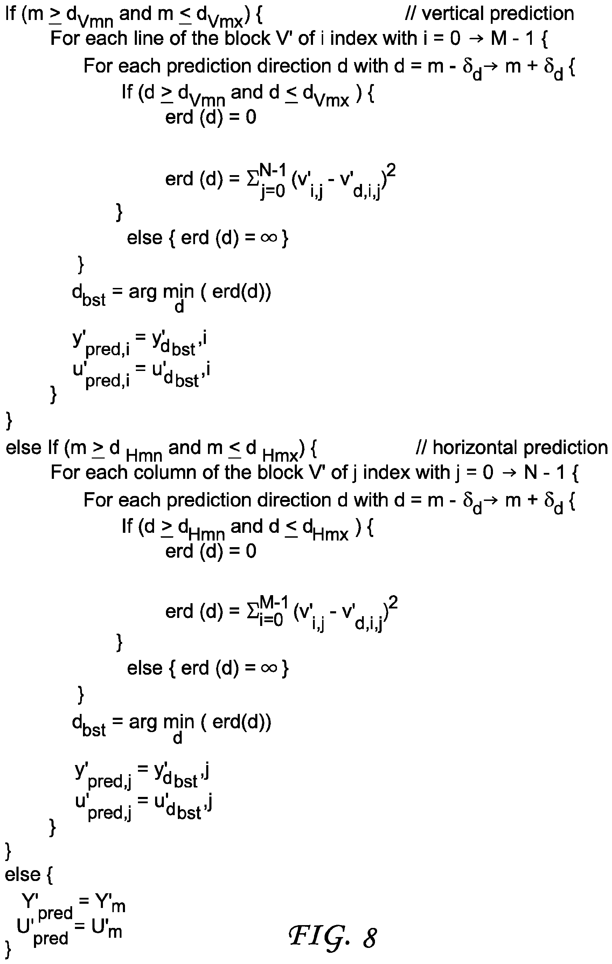

    c. The procedure is summarized by the pseudo code of Figure 8 based on the HEVC example of HEVC directional vertical and horizontal prediction modes with:

    d. $d_{Vmn}$, $d_{Vmx}$ : min and max vertical prediction index, $d_{Vmn}$ = 19, $d_{Vmx}$ = 34

    e. $d_{Hmn}$, $d_{Hmx}$ : min and max horizontal prediction index, $d_{Hmn}$ = 2, $d_{Hmx}$ = 18

    f. $\delta'_d$ : ilar delta increment ex: $\delta_d$ = 1

    g. $v'_{d,i,j}, v'_{d,i}, v'_{d,j}$ : , j coordinates of the decoded block $V'$ of the first component

    h. the pixel, line and column of i, j coordinates in the block of virtual prediction block $V'_d$ according to the directional d prediction

    i. $y'_{pred,i}, y'_{pred,j}, Y'_{pred}$ : ction index

    j. the final line, column or block (size of M lines, N columns) of prediction of the Y co

    k. $u'_{pred,i}, u'_{pred,j}, U'_{pred}$ : the final line, column or block (size of M lines, N columns) of prediction of the U component

3. Then decode the residual error prediction block difference $(r^{Y'}_{eq}, r^{U'}_{eq})$ of component Y respectively U, dequantize the DCT coefficients, inverse transform the dequantized error block $(Y'_{res}/U'_{res})$ and add this error block $Y'_{res}/U'_{res}$ to the block of prediction $Y'_{pred}/U'_{pred}$ giving the reconstructed luminance/chrominance block Y'/U'.

Notice that the step 4 of the encoder corresponds to the step 2 of the decoder.

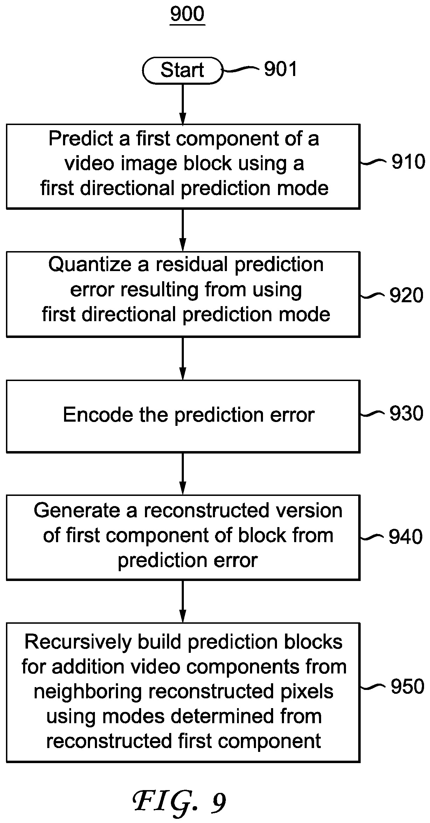

One embodiment of a method 900 used in an encoder and using the present principles is shown in Figure 9. The method commences at Start block 901 and proceeds to block 910 for predicting a first component of a video image block using a first directional prediction mode. Control proceeds from block 910 to block 920 for quantizing a residual prediction error resulting from using first directional prediction mode. Control proceeds from block 920 to block 930 for encoding the prediction error from block 920. Control proceeds from block 930 to block 940 for generating a reconstructed version of first component of the block from the prediction error. Control proceeds from block 940 to block 950 for recursively building prediction blocks for additional video components from neighboring reconstructed pixels using modes determined from the reconstructed first component.

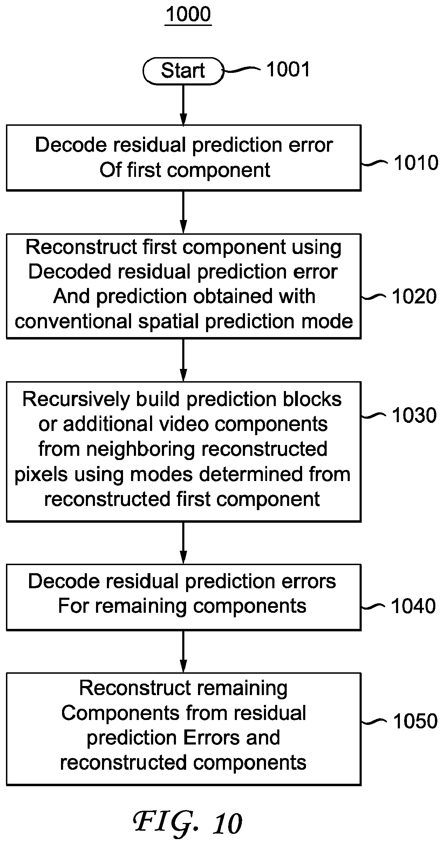

One embodiment of a method 1000 used in a decoder and using the present principles is shown in Figure 10. The method commences at Start block 1001 and proceeds to block 1010 for decoding residual prediction errors of a first component of a digital video block. The method proceeds from block 1010 to block 1020 for reconstructing a first component using the decoded residual prediction error and a prediction obtained with a spatial intraprediction mode. The method proceeds from block 1020 to block 1030 for recursively building prediction blocks for additional video components of the block from neighboring reconstructed pixels using modes determined from the reconstructed first component. Control proceeds from block 1030 to block 1040 for decoding residual prediction errors for the remaining components of the digital video image block. Control then proceeds from block 1040 to block 1050 for reconstructing the remaining components of the digital video block using the decoded residual prediction errors and the reconstructed components.

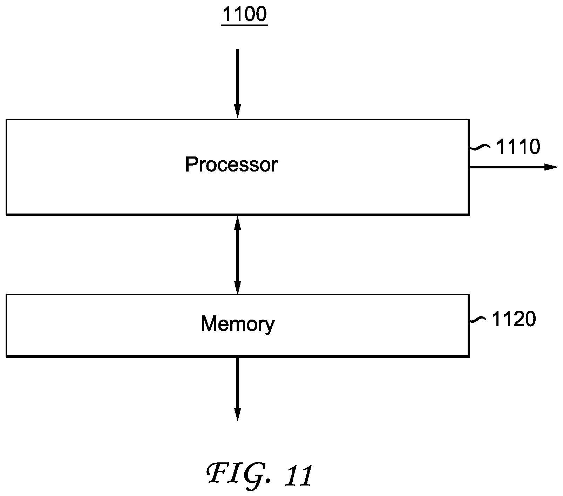

One embodiment of an apparatus 1100 using the present principles is shown in Figure 11. The apparatus comprises a Processor 1110 in signal communication with a Memory 1120. Processor 1110 can have at least one additional input port and can have at least one additional output port besides the connection with Memory 1120. Memory 1120 can have at least one additional output port. Processor 1110 is configured to perform the steps of Figure 9 or Figure 10 for encoding or decoding, respectively.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

In conclusion, a method for spatial guided prediction is provided in various embodiments, to be used in digital video compression systems.

**Claims**

1. A method for encoding of digital video images including an operation for intra frame prediction, wherein said intra frame prediction comprises:

    predicting (910) a first component of a video image block using a first directional prediction mode;
    quantizing (920) a residual prediction error that results from using said predicted first component;
    encoding (930) said quantized residual prediction error;
    generating (940) a reconstructed first component of the video image block from said quantized residual prediction error;
    recursively building (950) a prediction block for additional components of the video image block from respective spatial neighboring reconstructed pixels of the corresponding component using a plurality of prediction modes determined from reconstructed pixels of the first component of the video image block.

2. An apparatus for encoding of digital video images including an operation for intra frame prediction, wherein said apparatus comprises:

a memory (1120), and

a processor (1110) coupled to the memory and configured to perform said video image compression, wherein the processor is configured to perform said intra frame prediction by:

predicting a first component of a video image block using a first directional prediction mode;
quantizing a residual prediction error that results from using said predicted first component;
encoding said quantized residual prediction error;
generating a reconstructed first component of the video image block from said quantized residual prediction error;

recursively building a prediction block for additional components of the video image block from respective spatial neighboring reconstructed pixels of the corresponding component using a plurality of prediction modes determined from reconstructed pixels of the first component of the video image block.

3. A method for decoding of digital video images including an operation for intra frame prediction, comprising:

decoding (1010) a residual prediction error of a first component of a digital video image block;
reconstructing (1020) said first component of the digital video image block using the decoded residual prediction error and a prediction obtained with a spatial intraprediction mode;
recursively building (1030) a prediction block for additional components of the video image block from respective spatial neighboring reconstructed pixels of the corresponding component using a plurality of prediction modes determined from reconstructed pixels of the first component of the video image block;
decoding (1040) residual prediction errors for remaining components of the digital video image block; and,
reconstructing (1050) remaining components of the digital video image block from the decoded residual prediction errors and the recursively reconstructed prediction block of the additional components of the digital video image block.

4. An apparatus for decoding of digital video images including an operation for intra frame prediction, wherein said apparatus comprises:

a memory (1120), and
a processor (1110) coupled to the memory and configured to perform:

decoding a residual prediction error of a first component of a digital video image block;
reconstructing said first component of the digital video image block using the decoded residual prediction error and a prediction obtained with a spatial intraprediction mode;
recursively building a prediction block for additional components of the video image block from respective spatial neighboring reconstructed pixels of the corresponding component using a plurality of prediction modes determined from reconstructed pixels of the first component of the video image block;
decoding residual prediction errors for remaining components of the digital video image block; and,
reconstructing remaining components of the digital video image block from the decoded residual prediction errors and the recursively reconstructed prediction block of the additional components of the digital video image block.

5. The method of Claim 1 or 3 wherein recursively building a prediction block comprises finding a mode to be used for predicting each line of the prediction block using a prediction of another component of the block.

6. The method of Claim 1 or 3, wherein recursively building a prediction block comprises finding a mode to be used for predicting each row of the prediction block using a prediction of another component of the block.

7. The apparatus of claim 2 or 4, wherein recursively building a prediction block comprises finding a mode to be used for predicting each line of the prediction block using a prediction of another component of the block.

8. The apparatus of Claim 2 or 4 wherein recursively building a prediction block comprises finding a mode to be used for predicting each row of the prediction block using a prediction of another component of the block.

9. A nontransitory computer readable storage medium storing instructions, which when executed by a processor, cause the processor to perform the method of any one of claims 1, 3, 5 or 6.

10. An apparatus for transmission of digital video images comprising an apparatus according to claim 2, or claim 7 or 8, when dependent on claim 2.

11. An apparatus for receiving digital video images comprising an apparatus according to claim 4, or claim 7 or 8 when dependent on claim 4.

*FIG. 1*

Mode 0
vertical

Mode 1
horizontal

Mode 2
DC

Mode 3
diagonal down-left

Mode 4
diagonal down-right

Mode 5
vertical right

Mode 6
horizontal down

Mode 7
vertical left

Mode 8
horizontal up

*FIG. 2*

FIG. 3

EP 3 301 917 A1

Mode 6
horizontal down

Mode 7
vertical left

Mode 8
horizontal up

☐ Causal pixels

▦ Pixels to predict

*FIG. 3(Continued)*

0: Planar
1: DC

2
3
4
5
6
7
8
9
10
11
12
13
14
15
16
17
18
19
20
21
22
23 24 25 26 27 28 29 30 31 32 33 34

Example: Directional Mode 29

Boundary samples from decoded PUs

Current PU

*FIG. 4*

EP 3 301 917 A1

FIG. 5

EP 3 301 917 A1

*FIG. 6*

If $(m \geq d_{Vmn}$ and $m \leq d_{Vmx})$ {　　　　　　　　　// vertical prediction

　　For each line of the block V' of i index with i = 0 → M - 1 {

　　　　For each prediction direction d with d = m - $\delta_d$ → m + $\delta_d$ {

　　　　　　If $(d \geq d_{Vmn}$ and $d \leq d_{Vmx})$ {

　　　　　　　　erd (d) = 0

$$erd\ (d) = \Sigma_{j=0}^{N-1} (v'_{i,j} - v'_{d,i,j})^2$$

　　　　　　}

　　　　　　else { erd (d) = $\infty$ }

　　　　}

　　　　$d_{bst} = \arg\min_{d} (\ erd(d))$

　　　　$y'_{pred,i} = y'_{d_{bst},i}$
　　　　$u'_{pred,i} = u'_{d_{bst},i}$

　　　　}

　　}

}

else If $(m \geq d_{Hmn}$ and $m \leq d_{Hmx})$ {　　　　　　　　// horizontal prediction

　　For each column of the block V' of j index with j = 0 → N - 1 {

　　　　For each prediction direction d with d = m - $\delta_d$ → m + $\delta_d$ {

　　　　　　If $(d \geq d_{Hmn}$ and $d \leq d_{Hmx})$ {

　　　　　　　　erd (d) = 0

$$erd\ (d) = \Sigma_{\partial=0}^{M-1} (v'_{i,j} - v'_{d,i,j})^2$$

　　　　　　}

　　　　　　else { erd (d) = $\infty$ }

　　　　}

　　　　$d_{bst} = \arg\min_{d} (\ erd(d))$

　　　　$y'_{pred,j} = y'_{d_{bst},j}$
　　　　$u'_{pred,j} = u'_{d_{bst},j}$

　　　　}

　　}

}

else {

　　$Y'_{pred} = Y'_m$
　　$U'_{pred} = U'_m$

}

*FIG. 7*

```
If (m ≥ d_Vmn and m ≤ d_Vmx) {                         // vertical prediction
      For each line of the block V' of i index with i = 0 → M - 1 {
            For each prediction direction d with d = m - δ_d → m + δ_d {
                  If (d ≥ d_Vmn and d ≤ d_Vmx ) {
                        erd (d) = 0
```

$$erd\ (d) = \Sigma_{j=0}^{N-1}\ (v'_{i,j} - v'_{d,i,j})^2$$

```
                  }
                     else { erd (d) = ∞ }
            }
            d_bst = arg min ( erd(d))
                         d

            y'_{pred,i} = y'_{d_bst},i
            u'_{pred,i} = u'_{d_bst},i
      }
}
else If (m ≥ d_Hmn and m ≤ d_Hmx) {                     // horizontal prediction
      For each column of the block V' of j index with j = 0 → N - 1 {
            For each prediction direction d with d = m - δ_d → m + δ_d {
                  If (d ≥ d_Hmn and d ≤ d_Hmx ) {
                        erd (d) = 0
```

$$erd\ (d) = \Sigma_{i=0}^{M-1}\ (v'_{i,j} - v'_{d,i,j})^2$$

```
                  }
                     else { erd (d) = ∞ }
            }
            d_bst = arg min ( erd(d))
                         d

            y'_{pred,j} = y'_{d_bst},j
            u'_{pred,j} = u'_{d_bst},j
      }
}
else {
      Y'_{pred} = Y'_m
      U'_{pred} = U'_m
}
```

*FIG. 8*

900

```
        ( Start )──~901
            │
            ▼
┌───────────────────────────┐
│  Predict a first component │
│  of a video image block    │
│  using a first directional │── ~910
│  prediction mode           │
└───────────────────────────┘
            │
            ▼
┌───────────────────────────┐
│  Quantize a residual       │
│  prediction error          │
│  resulting from using      │── ~920
│  first directional         │
│  prediction mode           │
└───────────────────────────┘
            │
            ▼
┌───────────────────────────┐
│                            │
│  Encode the prediction     │── ~930
│  error                     │
│                            │
└───────────────────────────┘
            │
            ▼
┌───────────────────────────┐
│  Generate a reconstructed  │
│  version of first          │── ~940
│  component of block from   │
│  prediction error          │
└───────────────────────────┘
            │
            ▼
┌───────────────────────────┐
│  Recursively build         │
│  prediction blocks for     │
│  addition video components │
│  from neighboring          │── ~950
│  reconstructed pixels      │
│  using modes determined    │
│  from reconstructed first  │
│  component                 │
└───────────────────────────┘
```

*FIG. 9*

## 1000

```
        ┌─────────┐
        │  Start  │────── 1001
        └─────────┘
             │
             ▼
┌───────────────────────────────┐
│  Decode residual prediction    │
│  error Of first component      │────── 1010
└───────────────────────────────┘
             │
             ▼
┌───────────────────────────────┐
│  Reconstruct first component   │
│  using Decoded residual        │
│  prediction error And          │────── 1020
│  prediction obtained with      │
│  conventional spatial          │
│  prediction mode               │
└───────────────────────────────┘
             │
             ▼
┌───────────────────────────────┐
│  Recursively build prediction  │
│  blocks or additional video    │
│  components from neighboring    │────── 1030
│  reconstructed pixels using    │
│  modes determined from         │
│  reconstructed first component │
└───────────────────────────────┘
             │
             ▼
┌───────────────────────────────┐
│  Decode residual prediction    │
│  errors For remaining          │────── 1040
│  components                    │
└───────────────────────────────┘
             │
             ▼
┌───────────────────────────────┐
│  Reconstruct remaining         │
│  Components from residual      │────── 1050
│  prediction Errors and         │
│  reconstructed components      │
└───────────────────────────────┘
```

*FIG. 10*

1100

Processor ~1110

Memory ~1120

*FIG. 11*

Europäisches
Patentamt

European
Patent Office

Office européen
des brevets

## EUROPEAN SEARCH REPORT

Application Number

EP 16 30 6279

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG X ET AL: "New modes for chroma intra prediction", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G358, 10 November 2011 (2011-11-10), XP030110342, | 1-4,9-11 | INV. H04N19/11 H04N19/157 H04N19/186 H04N19/174 H04N19/192 H04N19/593 |
| Y | * abstract * * section 2 * * figures 2,3 * | 5-8 | |
| Y | WU (MICROSOFT RESEARCH ASIA) F ET AL: "Video coding technology proposal by Microsoft (and the University of Science and Technology of China)", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A118, 11 May 2010 (2010-05-11), XP030007561, ISSN: 0000-0049 * sections 2.7 and 2.7.1 * | 5-8 | |

TECHNICAL FIELDS SEARCHED (IPC)

H04N

-/--

The present search report has been drawn up for all claims

| Place of search | Date of completion of the search | Examiner |
|---|---|---|
| Munich | 16 March 2017 | Regidor Arenales, R |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

page 1 of 2

Europäisches
Patentamt

European
Patent Office

Office européen
des brevets

**EUROPEAN SEARCH REPORT**

Application Number

EP 16 30 6279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LAI (HISILICON / HUAWEI) C ET AL: "New intra prediction using the correlation between pixels and lines", 1. JCT-VC MEETING; 15-4-2010 - 23-4-2010; DRESDEN; (JOINTCOLLABORATIVE TEAM ON VIDEO CODING OF ISO/IEC JTC1/SC29/WG11 AND ITU-TSG.16 ); URL: HTTP://WFTP3.ITU.INT/AV-ARCH/JCTVC-SITE/,, no. JCTVC-A025, 20 April 2010 (2010-04-20) , XP030007512, ISSN: 0000-0049 * section 2.1 * ----- | 1-11 | |

TECHNICAL FIELDS
SEARCHED      (IPC)

The present search report has been drawn up for all claims

| Place of search | Date of completion of the search | Examiner |
|---|---|---|
| Munich | 16 March 2017 | Regidor Arenales, R |

EPO FORM 1503 03.82 (P04C01)

page 2 of 2